(19) Europäisches Patentamt
European Patent Office
Office européen des brevets

(11) **EP 4 779 845 A1**

(12) **EUROPEAN PATENT APPLICATION**
published in accordance with Art. 153(4) EPC

(43) Date of publication:
**22.07.2026 Bulletin 2026/30**

(51) International Patent Classification (IPC):
*H02K 1/276* (2022.01)   *F04B 39/00* (2006.01)
*F04C 29/00* (2006.01)

(21) Application number: 25805296.8

(22) Date of filing: 18.07.2025

(52) Cooperative Patent Classification (CPC):
**F04B 39/00; F04C 29/00; H02K 1/22; H02K 1/276**

(86) International application number:
**PCT/JP2025/025825**

(87) International publication number:
**WO 2026/069969 (02.04.2026 Gazette 2026/14)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH LA MA MD TN**

(30) Priority: 27.09.2024 JP 2024168366

(71) Applicant: DAIKIN INDUSTRIES, LTD.
**Osaka-Shi, Osaka 530-0001 (JP)**

(72) Inventors:
• **KASAI, Mikiya**
  **Osaka-shi, Osaka 530-0001 (JP)**
• **HIRATSUKA, Daisuke**
  **Osaka-shi, Osaka 530-0001 (JP)**
• **HIRANO, Masaki**
  **Osaka-shi, Osaka 530-0001 (JP)**
• **HIBINO, Hiroshi**
  **Osaka-shi, Osaka 530-0001 (JP)**

(74) Representative: **Hoffmann Eitle**
**Patent- und Rechtsanwälte PartmbB
Arabellastraße 30
81925 München (DE)**

(54) **MOTOR FOR COMPRESSOR, COMPRESSOR, AND REFRIGERATION DEVICE**

(57)    Suppose a position of the rotor (31) in a circumferential direction where magnetic flux generated by a magnet (33) reaches its maximum is a first position (PI), and an imaginary straight line passing the first position (P1) and a rotation axis (O) is a magnetic pole centerline (CL), at least a portion of the magnet (33) or a rotor core (32) is asymmetrical with respect to the magnetic pole centerline (CL) as viewed from an axial direction. A position of the rotor (31) in the circumferential direction where magnetic resistance reaches its maximum, which is a second position (P2), is shifted backward from the first position (P1) in a rotation direction of the rotor (31).

FIG.9B

## Description

TECHNICAL FIELD

The present disclosure relates to a compressor motor, a compressor, and a refrigeration apparatus.

BACKGROUND ART

Output torque of a motor includes magnet torque and reluctance torque. Normally, the magnet torque and the reluctance torque are maximized at different current phases, so that the output torque of the motor is lower than the sum of the peak values of the magnet torque and the reluctance torque.

Patent Document 1 discloses an electric motor including a permanent magnet rotor having a plurality of permanent magnets and a reluctance rotor having a plurality of salient poles. The permanent magnet rotor and the reluctance rotor are disposed at different angles so that the rotors generate the maximum torques at the same current phase, increasing the output torque.

CITATION LIST

PATENT DOCUMENT

Patent Document 1: Japanese Unexamined Patent Publication No. 2003-18777

SUMMARY OF THE INVENTION

TECHNICAL PROBLEM

In the electric motor of Patent Document 1, the permanent magnet rotor and the reluctance rotor generate the maximum torques at the same current phase, and the output torque increases at the current phase. However, the torque decreases at any other current phase different from this current phase. That is, the electric motor of Patent Document 1 has a problem in that the output torque decreases when the motor is not operated at the current phase at which the output torque reaches its maximum.

An object of the present disclosure is to provide a compressor motor capable of suppressing the decrease in output torque in a wide range of current phases.

SOLUTION TO THE PROBLEM

A first aspect of the present disclosure is directed to a compressor motor (20) including a rotor (31) configured to rotate in one direction about a rotation axis (O), and a stator (21) disposed to face the rotor (31) in a radial direction. The rotor (31) includes a rotor core (32) and a magnet (33), and has polarities alternated in a circumferential direction. The stator (21) includes a stator core (22) and a winding (23). Suppose a position of the rotor (31) in a circumferential direction where magnetic flux generated by the magnet (33) reaches its maximum is a first position (P1) and an imaginary straight line passing the first position (P1) and the rotation axis (O) is a magnetic pole centerline (CL), at least a portion of the magnet (33) or the rotor core (32) is asymmetrical with respect to the magnetic pole centerline (CL) as viewed from an axial direction. Suppose a position of the rotor (31) in the circumferential direction where magnetic resistance reaches its maximum is a second position (P2), the second position (P2) is shifted backward from the first position (P1) in a rotation direction of the rotor (31).

According to the first aspect, in the circumferential direction of the rotor (31), the second position (P2) where the magnetic resistance reaches its maximum is shifted backward in the rotation direction from the first position (P1) where the magnetic flux generated by the magnet (33) reaches its maximum. This increases a difference between a current phase at which the magnet torque reaches its maximum and a current phase at which the reluctance torque reaches its maximum, thereby suppressing the decrease in output torque in a wide range of current phases.

A second aspect of the present disclosure is an embodiment of the first aspect. In the second aspect, when there is a phase difference between a phase of an AC voltage induced in the winding (23) by the magnet (33) and a phase of an AC current supplied to the winding (23), and at the phase difference, magnet torque generated by the magnet (33) and the AC current is zero, and a direction of magnetic flux generated by the AC current is opposite to a direction of magnetic flux generated by the magnet (33), reluctance torque generated by the rotor core (32) and the AC current takes a positive value.

In the second aspect, the reluctance torque takes a positive value even in a range where the phase difference at which the magnet torque is zero, that is, a range where the current phase is large, thereby increasing the output torque in the range where the current phase is large.

A third aspect of the present disclosure is an embodiment of the first or second aspect. In the third aspect, the rotor (31) includes a first rotor portion (31a) including the rotor core (32) and the magnet (33) and a second rotor portion (31b) that is disposed adjacent to the first rotor portion (31a) in the axial direction and includes the rotor core (32) and no magnets (33). Suppose a position of the first rotor portion (31a) in the circumferential direction where the magnetic flux generated by the magnet (33) reaches its maximum is a third position (P3) and a position of the second rotor portion (31b) in the circumferential direction where the magnetic resistance reaches its maximum is a fourth position (P4), the fourth position (P4) is shifted backward in the rotation direction of the rotor (31) from the third position (P3).

In the third aspect, the difference between the current phase at which the magnet torque generated by the first rotor portion (31a) reaches its maximum and the current phase at which the reluctance torque generated by the second rotor portion (31b) reaches its maximum increases. This can suppress the decrease in output torque in a wide range of current phases.

A fourth aspect of the present disclosure is an embodiment of the third aspect. In the fourth aspect, as viewed from the axial direction, the rotor core (32) of the first rotor portion (31a) has substantially the same shape as the rotor core (32) of the second rotor portion (31b), and the rotor core (32) of the second rotor portion (31b) is shifted backward in the rotation direction of the rotor (31) from the rotor core (32) of the first rotor portion (31a).

In the fourth aspect, the rotor core (32) of the first rotor portion (31a) and the rotor core (32) of the second rotor portion (31b) have the same shape, thereby allowing easy manufacture of the rotor (31).

A fifth aspect of the present disclosure is an embodiment of the third or fourth aspect. In the fifth aspect, the first rotor portion (31a) has a region that does not face the stator (21) in the radial direction.

In the fifth aspect, the magnet torque generated by the first rotor portion (31a) can be increased, and thus the output torque increases.

A sixth aspect of the present disclosure is an embodiment of any one of the first to fifth aspects. In the sixth aspect, at least a portion of the magnet (33) is asymmetrical with respect to the magnetic pole centerline (CL).

In the sixth aspect, the decrease in output torque can be suppressed in a wide range of current phases although the rotor (31) is a single rotor having no divided portions.

A seventh aspect of the present disclosure is directed to a compressor including the compressor motor (20) of any one of the first to sixth aspects.

In the seventh aspect, the compressor motor (20) capable of suppressing the output torque in a wide range of current phases is used, thereby improving the energy efficiency of the compressor (10).

An eighth aspect of the present disclosure is directed to a refrigeration apparatus including the compressor (10) of the seventh aspect.

In the eighth aspect, the compressor (10) having high energy efficiency is used, thereby reducing the power consumption of the refrigeration apparatus (1).

BRIEF DESCRIPTION OF THE DRAWINGS

[FIG. 1] FIG. 1 is a vertical cross-sectional view of a basic configuration of a motor.
[FIG. 2] FIG. 2 is a lateral cross-sectional view of a stator in the motor shown in FIG. 1.
[FIG. 3] FIG. 3 is a schematic vertical cross-sectional view of a configuration of a motor of the first embodiment.
[FIG. 4A] FIG. 4A is a schematic lateral cross-sectional view of a configuration of a first rotor portion of the motor of the first embodiment.
[FIG. 4B] FIG. 4B is a schematic lateral cross-sectional view of a configuration of a second rotor portion of the motor of the first embodiment.
[FIG. 5A] FIG. 5A is a schematic view of a measurement environment for identifying a position of the rotor in a circumferential direction where magnetic flux generated by magnets reaches its maximum.
[FIG. 5B] FIG. 5B is a graph of the measurement results obtained in the measurement environment shown in FIG. 5A.
[FIG. 5C] FIG. 5C is a schematic view of the position of the rotor in the circumferential direction where the magnetic flux generated by the magnets reaches its maximum, identified from the measurement results shown in FIG. 5B.
[FIG. 6A] FIG. 6A is a schematic view of a measurement environment for identifying a position of the rotor in the circumferential direction where magnetic resistance reaches its maximum.
[FIG. 6B] FIG. 6B is a graph of the measurement results obtained in the measurement environment shown in FIG. 6A.
[FIG. 6C] FIG. 6C is a schematic view of the position of the rotor in the circumferential direction where the magnetic resistance reaches its maximum, identified from the measurement results shown in FIG. 6B.
[FIG. 7A] FIG. 7A is a graph showing torque characteristics of the case where, in the motor of the first embodiment, the circumferential position of the first rotor portion where the magnetic flux generated by the magnets reaches its maximum and the circumferential position of the second rotor portion where the magnetic resistance reaches its maximum are not shifted from each other.
[FIG. 7B] FIG. 7B is a graph showing the torque characteristics of the motor of the first embodiment.
[FIG. 7C] FIG. 7C is a graph showing the torque characteristics shown in FIG. 7A and the torque characteristics shown in FIG. 7B in comparison.
[FIG. 8A] FIG. 8A is a graph showing the torque characteristics in a range where the current phase is small when a large current is supplied to the motor of the first embodiment.
[FIG. 8B] FIG. 8B is a graph showing the torque characteristics in a range where the current phase is small when a small current is supplied to the motor of the first embodiment.
[FIG. 9A] FIG. 9A is a schematic view of a rotor in lateral cross section in the case where in a motor of a first variation of the first embodiment, a circumferential position where the magnetic flux generated by the magnets reaches its maximum and a circumferential position where the magnetic resistance reaches its maximum are not shifted from each other.
[FIG. 9B] FIG. 9B is a schematic view of the rotor of the motor of the first variation of the first embodiment in lateral cross section.

[FIG. 10A] FIG. 10A is a graph showing torque characteristics of the case where, in the motor of the first variation of the first embodiment, the circumferential position where the magnetic flux generated by the magnets reaches its maximum and the circumferential position where the magnetic resistance reaches its maximum are not shifted from each other.

[FIG. 10B] FIG. 10B is a graph showing the torque characteristics of the motor of the first variation of the first embodiment.

[FIG. 10C] FIG. 10C is a graph showing the torque characteristics shown in FIG. 10A and the torque characteristics shown in FIG. 10B in comparison.

[FIG. 11] FIG. 11 is a schematic view of a motor of a second variation of the first embodiment in vertical cross section.

[FIG. 12A] FIG. 12A is a graph showing torque characteristics of the case where, in the motor of the second variation of the first embodiment, the circumferential position of the first rotor portion where the magnetic flux generated by the magnets reaches its maximum and the circumferential position of the second rotor portion where the magnetic resistance reaches its maximum are not shifted from each other.

[FIG. 12B] FIG. 12B is a graph showing the torque characteristics of the motor of the second variation of the first embodiment.

[FIG. 12C] FIG. 12C is a graph showing the torque characteristics shown in FIG. 12A and the torque characteristics shown in FIG. 12B in comparison.

[FIG. 13] FIG. 13 is a vertical cross-sectional view of an example of a configuration of a compressor of a second embodiment.

[FIG. 14] FIG. 14 is a piping system diagram showing a configuration of a refrigeration apparatus of a third embodiment.

DESCRIPTION OF EMBODIMENTS

Embodiments of the present disclosure will be described below with reference to the drawings. The embodiments below are merely exemplary ones in nature, and are not intended to limit the scope, applications, or use of the invention. In the drawings, the same reference numerals denote the same components, but the dimensions in the drawings, such as a length, a width, a thickness, and a depth, are changed as necessary from the actual scales for the sake of clarity and simplicity of the drawings, and may not correspond to the actual relative dimensions.

(First Embodiment)

<Basic Configuration of Motor>

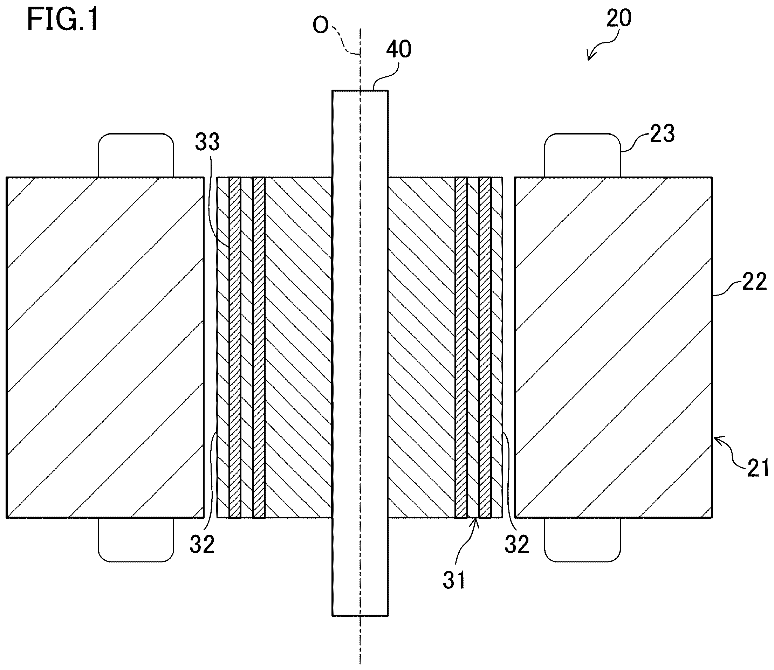

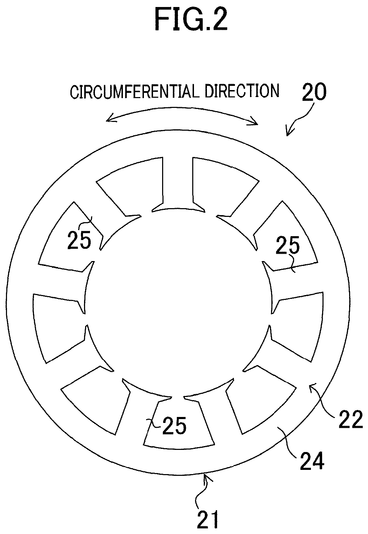

As illustrated in FIGS. 1 and 2, a motor (20) includes a stator (21) and a rotor (31). The motor (20) is a compressor motor (20). The motor (20) is an inner rotor motor. The stator (21) includes a stator core (22) and a plurality of windings (23). The stator core (22) is disposed to face the rotor (31) in a radial direction. The rotor (31) is configured to be rotatable together with a drive shaft (40). The rotor (31) rotates in a predetermined direction about an axis of the drive shaft (40) (hereinafter referred to as a rotation axis (O)). The rotor (31) includes a rotor core (32) and a plurality of magnets (33), and has polarities alternated in a circumferential direction.

In the present disclosure, a direction in which the rotation axis (O) extends is referred to as an "axial direction," a direction orthogonal to the "axial direction" is referred to as a "radial direction," and a direction around the rotation axis (O) is referred to as a "circumferential direction." Further, a cross section taken along the "axial direction" is referred to as a "vertical cross section," and a cross section orthogonal to the "axial direction" is referred to as a "lateral cross section."

The stator core (22) is formed by, for example, stacking electromagnetic steel plates in the axial direction. The stator core (22) includes an annular back yoke (24) and a plurality of teeth (25). The teeth (25) extend radially inward from an inner peripheral surface of the back yoke (24). The windings (23) are respectively wound around the teeth (25).

The rotor core (32) is formed by, for example, stacking electromagnetic steel plates in the axial direction. The magnets (33) are disposed inside the rotor core (32). The magnets (33) are permanent magnets such as ferrite magnets. The magnets (33) are arranged in the circumferential direction of the rotor core (32) and penetrate the rotor core (32) in the axial direction.

The configuration of the motor (20) shown in FIGS. 1 and 2 is an example, and there are no particular limitations on the number of poles of the motor (20), the shape of the stator core (22), the number of the teeth (25), the number of the magnets (33), and how the windings (23) are wound. Although not shown, end plates may be disposed at upper and lower ends of the rotor core (32) in the axial direction, and the stacked steel plates constituting the rotor core (32) may be fastened in the axial direction with bolts penetrating the end plates and the rotor core (32) in the axial direction to improve the characteristics of the motor (20).

<Configuration of Rotor>

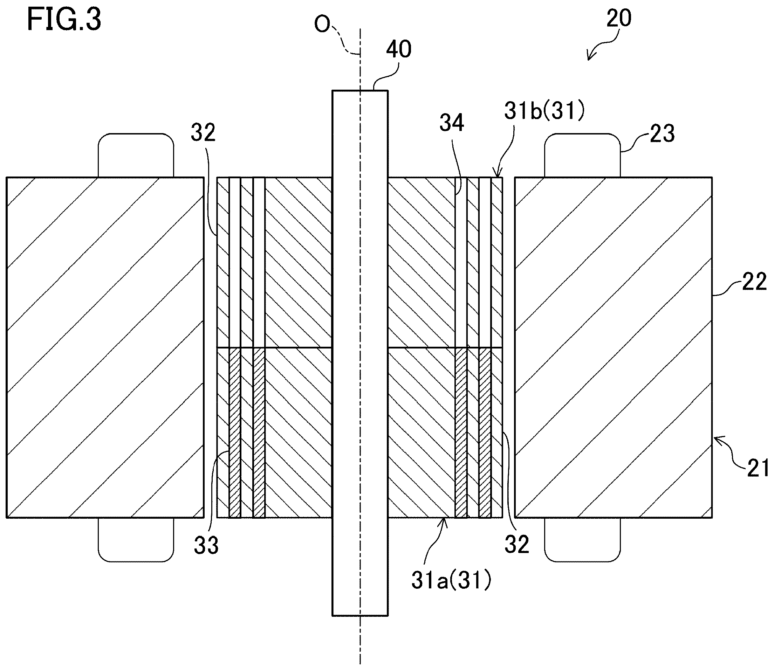

In the motor (20) of the first embodiment, the rotor (31) includes a first rotor portion (31a) including the rotor core (32) and the magnets (33) and a second rotor portion (31b) including the rotor core (32) and no magnets (33) as illustrated in FIG. 3. The first rotor portion (31a) and the second rotor portion (31b) are disposed adjacent to each other in the axial direction.

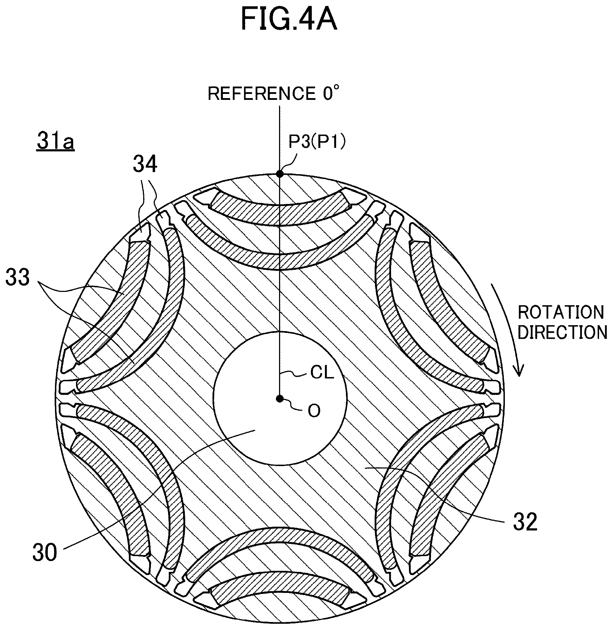

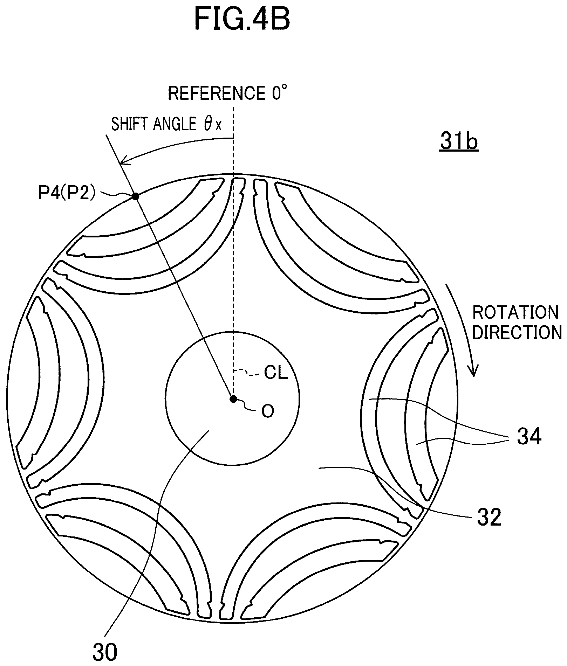

As illustrated in FIGS. 4A and 4B, a through hole (30) into which the drive shaft (40) is inserted in the axial direction is provided at the radial center of each of the first rotor portion (31a) and the second rotor portion (31b). As viewed from the axial direction, the rotor core (32) of the first rotor portion (31a) has substantially the same shape as the rotor core (32) of the second rotor portion (31b). Specifically, six pairs of holes (34) are formed in the rotor core (32) of the first rotor portion (31a) and the second rotor portion (31b). Each pair is aligned in the radial direction, and the six pairs are arranged at regular intervals in the circumferential direction. The holes (34) are formed to penetrate the first rotor portion (31a) and the second rotor portion (31b) in the axial direction. The magnets (33) are disposed in the holes (34) of the first rotor portion (31a), while no magnets (33) are disposed in the holes (34) of the second rotor portion (31b).

In each of the first rotor portion (31a) and the second rotor portion (31b), the two holes (34) aligned in the radial direction are disposed for a single magnetic pole, and the holes (34) corresponding to six magnetic poles are arranged at regular intervals in the circumferential direction to surround the through hole (30). Each of the holes (34) has an arc shape that is convex radially inward when viewed in the axial direction. Ends of the hole (34) are located near an outer periphery of the rotor core (32) when viewed in the axial direction. In the first rotor portion (31a), the magnets (33) aligned magnetically in series are fitted into the holes (34) of each magnetic pole.

The magnets (33) in the first rotor portion (31a) generate magnet torque. Further, each rotor core (32) is shaped such that the ease of magnetic flux flow differs between different positions of the rotor core (32) in the circumferential direction, and thus the first rotor portion (31a) and the second rotor portion (31b) generate reluctance torque.

Although the rotor (31) of this example illustrated in FIGS. 4A and 4B has six poles, the rotor (31) may have any number of poles. In this example, the two holes (34) are provided for each magnetic pole, but any number of holes (34) may be provided for each magnetic pole.

In the motor (20) of the first embodiment, as illustrated in FIGS. 4A and 4B, suppose that an imaginary straight line passing the rotation axis (O) and a position of the rotor (31) in the circumferential direction (first position (P1)) where the magnetic flux generated by the magnets (33) reaches its maximum, that is, a position of the first rotor portion (31a) in the circumferential direction (third position (P3)) where the magnetic flux generated by the magnets (33) reaches its maximum, is a magnetic pole centerline (CL), the rotor core (32) of the second rotor portion (31b), that is, the holes (34), are asymmetrical with respect to the magnetic pole centerline (CL) as viewed from the axial direction. As illustrated in FIG. 4B, a position of the rotor (31) in the circumferential direction (second position (P2)) where the magnetic resistance reaches its maximum, that is, a position of the second rotor portion (31b) in the circumferential position (fourth position (P4)) where the magnetic resistance reaches its maximum, is shifted backward in the rotation direction of the rotor (31) from the first position (P1) (third position (P3)) by a shift angle $\theta x$. In FIGS. 4A and 4B, the magnetic pole centerline (CL) of one of the magnetic poles is defined as a reference of rotation 0°.

In this example, the rotor core (32) of the second rotor portion (31b) is shifted backward in the rotation direction of the rotor (31) from the rotor core (32) of the first rotor portion (31a) so that the rotor core (32) of the second rotor portion (31b) is asymmetrical with respect to the magnetic pole centerline (CL) as viewed from the axial direction. Alternatively, the shape of the rotor core (32) of the second rotor portion (31b), that is, the shape of the holes (34), may be changed so that the rotor core (32) of the second rotor portion (31b) is asymmetrical with respect to the magnetic pole centerline (CL). Instead of making the rotor core (32) of the second rotor portion (31b) asymmetrical with respect to the magnetic pole centerline (CL), the magnets (33) may be disposed asymmetrically with respect to the magnetic pole centerline (CL) in the holes (34) of the rotor core (32) of the second rotor portion (31b).

<Circumferential Position where Magnetic Flux Generated by Magnet Reaches Its Maximum>

The "position of the rotor (31) in the circumferential direction where the magnetic flux generated by the magnets (33) reaches its maximum (first position (P1))" can be identified by, for example, rotating the rotor (31) with the terminals of the motor (20) open, measuring the angle of the rotor (31) and the voltage induced in the windings (23), and evaluating the measurement results.

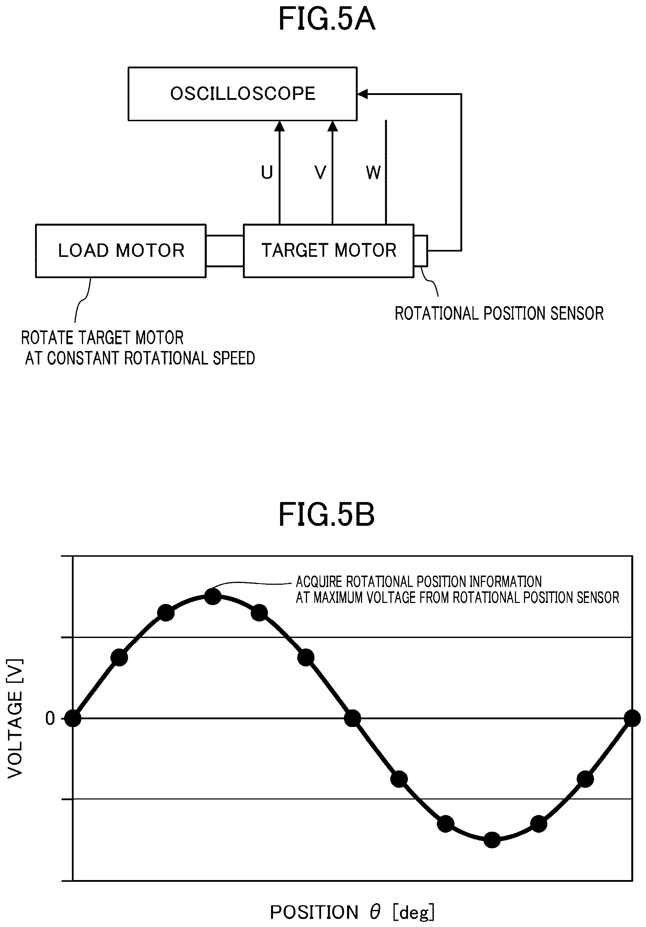

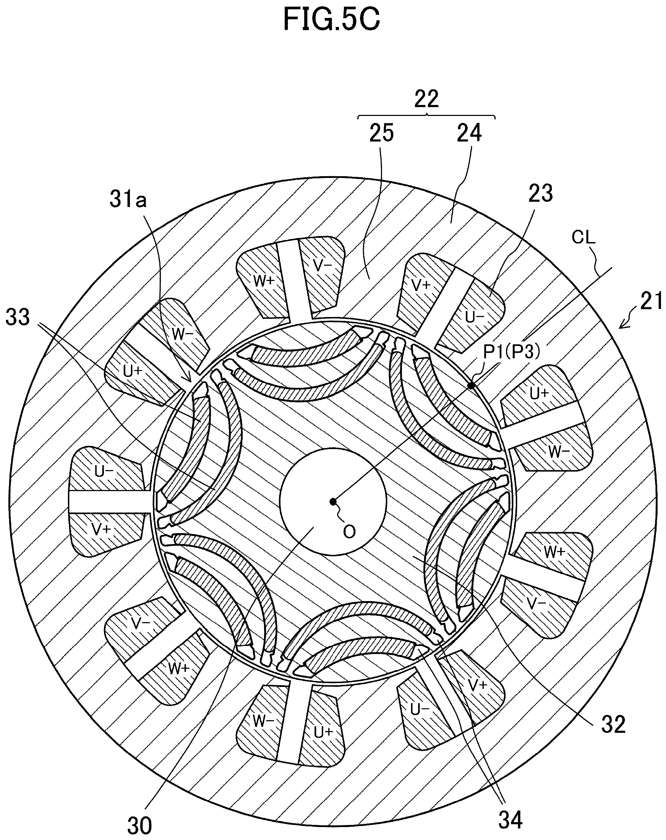

Specifically, as illustrated in FIG. 5A, a motor to be measured (a target motor) is connected to another motor (a load motor) for rotating the target motor at a constant rotational speed, and the U and V phases of the target motor and a rotational position sensor are connected to an oscilloscope. While the target motor is rotated by the load motor, a line voltage Vuv between the U and V phases is acquired by the oscilloscope, and rotational position information of the target motor measured by the rotational position sensor is acquired. Next, the acquired line voltage Vuv is Fourier transformed to acquire a fundamental waveform as illustrated in FIG. 5B, and rotational position information at the peak of the fundamental waveform of the line voltage Vuv is determined. Then, a phase corresponding to (30/the number of pole pairs)° is added to the rotational position information of the line voltage Vuv to convert the rotational position information of the line voltage Vuv into the rotational position information of the U-phase voltage, and a phase corresponding to (90/the number of pole pairs)° is subtracted from the rotational position information of the U-phase voltage to convert the rotational position information of the U-phase voltage into the rotational position information of the U-phase magnetic flux. By matching the rotor position with the rotational position information of the U-phase magnetic flux obtained in this manner, for example, the "circumferential position where the magnetic flux generated by the magnets reaches its maximum" is identified as illustrated in FIG. 5C. In the example shown in FIG. 5C, the position where the U-phase coil (winding (23)) and the magnet (33) face each other is the "position of the rotor (31) in the circumferential direction (first position (P1)) where the magnetic flux generated by the magnets (33) reaches its maximum," that is, the "position of the first rotor portion (31a) (third position (P3)) where the magnetic flux generated by the magnets (33) reaches its maximum." In FIG. 5C, the same components as those shown in FIGS. 1 to 3 and 4A are denoted by the same reference characters.

<Circumferential Position where Magnetic Resistance Reaches Its Maximum>

The "position of the rotor (31) in the circumferential direction (second position (P2)) where the magnetic resistance reaches its maximum" can be identified by measuring the inductance. With the rotor (31) locked at each angle of the rotor (31), an AC voltage is applied to the two terminals to measure an AC current, and the inductance can be obtained by calculation from the AC voltage and the AC current. The "position in the circumferential direction where the inductance reaches its minimum" is the "position of the rotor (31) in the circumferential direction (second position (P2)) where the magnetic resistance reaches its maximum."

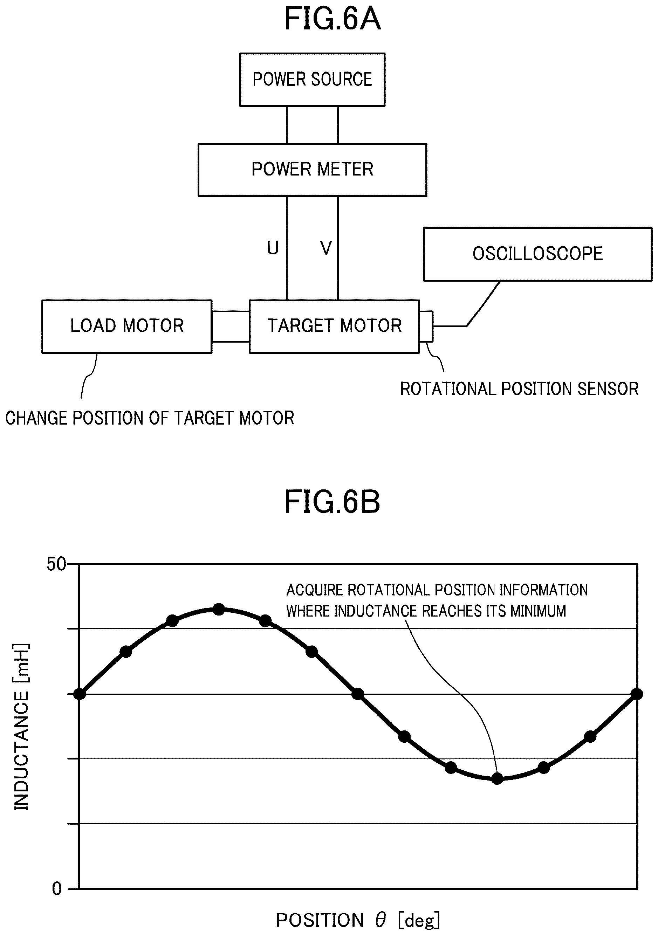

Specifically, as illustrated in FIG. 6A, a motor to be measured (a target motor) is connected to another motor (a load motor) for changing the fixed position of the target motor, the U and V phases of the target motor are connected to a power meter and a power source, and a rotational position sensor is connected to an oscilloscope. Next, while the target motor is fixed by the load motor not to rotate, an AC voltage is applied to the U and V phases, a line voltage effective value between the U and V phases and a phase current effective value are acquired by the power meter, and rotational position information of the target motor measured by the rotational position sensor is acquired by the oscilloscope. The above measurement is repeated for a half cycle of the electrical angle while changing the rotational position of the target motor by the load motor. Then, using the line voltage effective value Vuv between the U and V phases, a U-phase current effective value Iu, an angular frequency $\omega$ps of the power source, and an armature resistance Ra for one phase, inductance Luv between the U and V phases is calculated by the following equation:

$$Luv = \sqrt{((Vuv / Iu)^2 - (2Ra)^2)}/\omega ps$$

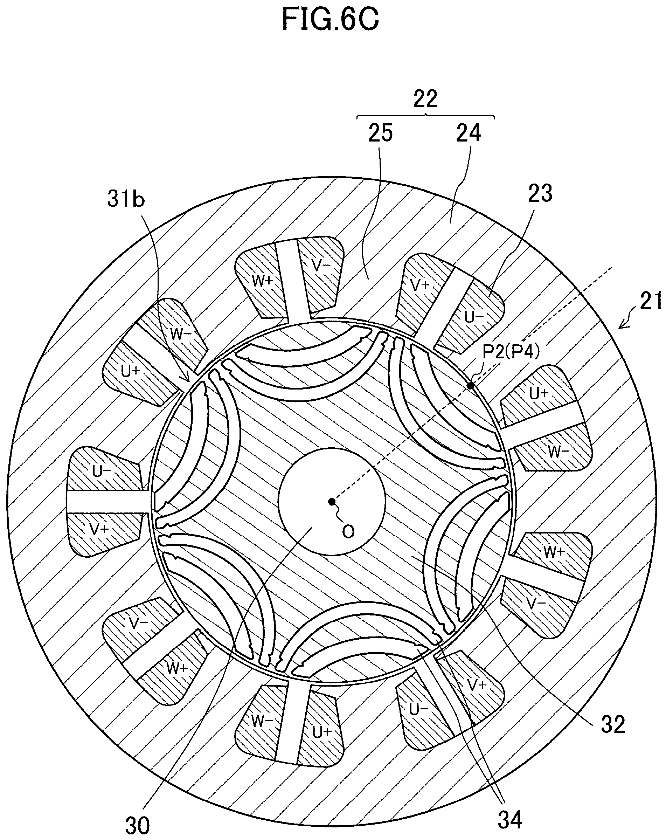

The calculation is repeated for a half cycle of the electrical angle. Next, the obtained inductance Luv between the U and V phases is Fourier transformed to obtain a fundamental waveform as shown in FIG. 6B, and rotational position information at which the inductance Luv between the U and V phases is minimized is determined. Next, a phase of (30/the number of pole pairs)° is added to the rotational position information of the inductance Luv between the U and V phases to convert the rotational position information of the inductance Luv between the U and V phases into the rotational position information of the inductance of the U phase. By matching the rotor position with the rotational position information of the inductance of the U phase obtained in this manner, for example, the "position in the circumferential direction where the magnetic resistance reaches its maximum" is identified as illustrated FIG. 6C. In the example shown in FIG. 6C, the position where the U-phase coil (winding (23)) and the holes (34) face each other is "the position of the rotor (31) in the circumferential direction (second position (P2)) where the magnetic resistance reaches its maximum," that is, "the position of the second rotor portion (31b) in the circumferential direction (fourth position (P4)) where the magnetic resistance reaches its maximum." In FIG. 6C, the same components as those shown in FIGS. 1 to 3 and 4B are denoted by the same reference characters.

<Torque Characteristics>

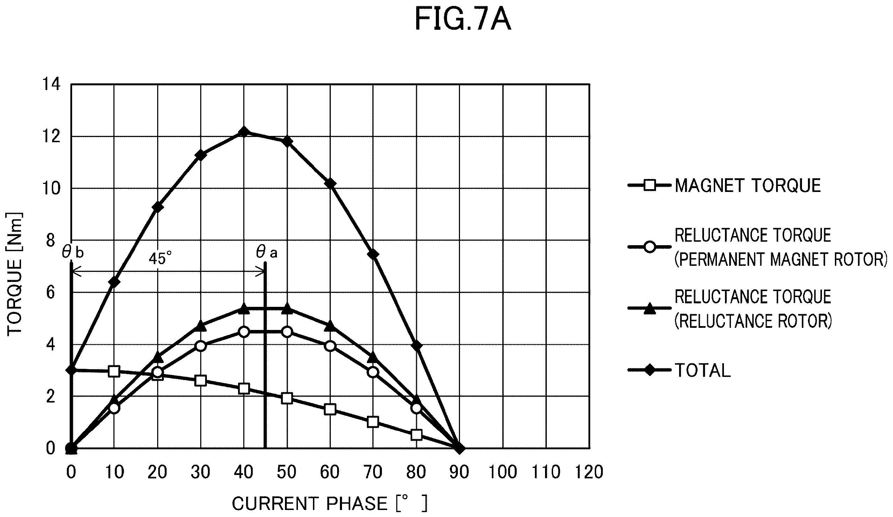

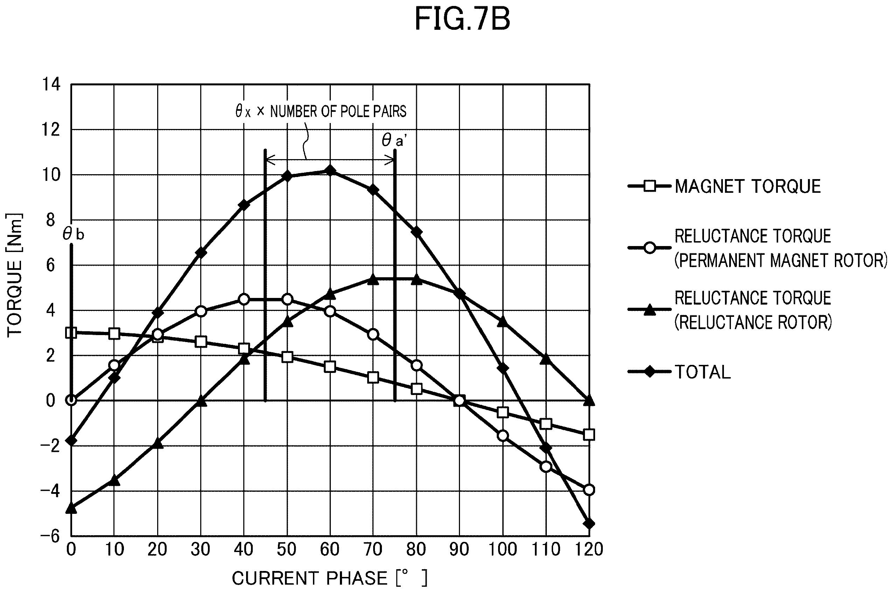

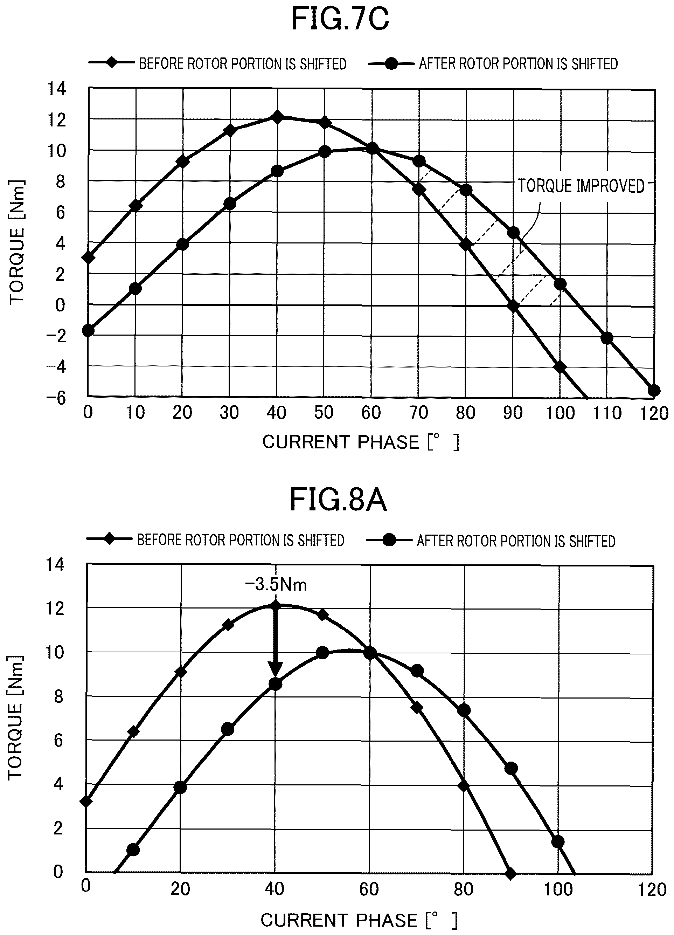

In the motor (20) of the first embodiment described above, as illustrated in FIGS. 4A and 4B, the position of the rotor (31) in the circumferential direction where the magnetic resistance reaches its maximum (second position (P2)), that is, the position of the second rotor portion (31b) in the circumferential direction where the magnetic resistance reaches its maximum (fourth position (P4)), is shifted backward in the rotation direction of the rotor (31) from the position of the rotor (31) in the circumferential direction where the magnetic flux generated by the magnets (33) reaches its maximum (first position (P1)), that is, the position of the first rotor portion (31a) in the circumferential direction where the magnetic flux generated by the magnets (33) reaches its maximum (third position (P3)). This can increase the current phase at which the reluctance torque generated by the second rotor portion (31b) reaches its peak so that the current phase at which the magnet torque generated by the first rotor portions (31a) reaches its peak and the current phase at which the reluctance torque generated by the second rotor portion (31b) reaches its peak are separated from each other as illustrated FIGS. 7A and 7B. Thus, as illustrated FIG. 7C, the output torque (total torque) of the rotor (31) can be increased in a range where the current phase is large.

Specifically, FIG. 7A shows the torque characteristics of the case where, in the motor (20) of the first embodiment, the fourth position (P4) is not shifted from the third position (P3) (comparative example), FIG. 7B shows the torque characteristics of the motor (20) of the first embodiment when the fourth position (P4) is shifted backward in the rotation direction of the rotor (31) from the third position (P3) by the shift angle θx, and FIG. 7C shows the output torque of the comparative example and the output torque of the first embodiment in comparison. In FIGS. 7A and 7B, the reluctance torque generated by the first rotor portion (31a) is referred to as "reluctance torque of the permanent magnet rotor," and the reluctance torque generated by the second rotor portion (31b) is referred to as "reluctance torque of the reluctance rotor."

Suppose the "reluctance torque of the reluctance rotor" shown in FIG. 7A reaches its peak at a current phase θa, the "magnet torque (the magnet torque generated by the first rotor portion (31a)" shown in FIG. 7A reaches its peak at a current phase θb, and the "reluctance torque of the reluctance rotor" shown in FIG. 7B reaches its peak at a current phase θa', the shift angle θx is determined to satisfy

$$45° < θa' - θb$$

and

$$θa' = (θx × \text{ the number of pole pairs}) + θa.$$

In other words, the shift angle θx is determined so that the current phase θa' at which the "reluctance torque of the reluctance rotor" shown in FIG. 7B reaches its peak is larger than the current phase θa at which the "reluctance torque of the reluctance rotor" shown in FIG. 7A reaches its peak by "shift angle θx × the number of pole pairs." This can increase the current phase at which the reluctance torque generated by the second rotor portion (31b) reaches its peak so that the current phase at which the magnet torque generated by the first rotor portions (31a) reaches its peak and the current phase at which the reluctance torque generated by the second rotor portion (31b) reaches its peak are separated from each other, thereby increasing the output torque (total torque) of the rotor (31) in a range where the current phase is large.

In the present disclosure, the "current phase" is the "phase of the AC current supplied to the winding (23)" with respect to a reference (0°) which is the "phase of the AC voltage induced in the winding (23) by the magnet (33)." In other words, the "current phase" is a "phase difference" between the "phase of the AC voltage induced in the winding (23) by the magnet (33)" and the "phase of the AC current supplied to the winding (23)." Thus, the current phase θb shown in FIGS. 7A and 7B at which the "magnet torque" reaches its peak value is 0°, the current phase θa shown in FIG. 7A at which the "reluctance torque (of the permanent magnet rotor and the reluctance rotor)" reaches its peak value is 45°, and the current phase θa' shown in FIG. 7B at which the "reluctance torque (of the reluctance rotor)" reaches its peak value is larger than 45°.

In the motor (20) of the first embodiment, as shown in FIG. 7B, the reluctance torque (of the reluctance rotor) generated by the AC current supplied to the windings (23) and the rotor core (32) takes a positive value at a current phase of 90° at which the magnet torque is zero (a current phase at which the direction of the magnetic flux generated by the AC current supplied to the windings (23) is opposite to the direction of the magnetic flux generated by the magnets (33)). Thus, as shown in FIG. 7C, the output torque (total torque) also takes a positive value at the current phase of 90°. On the other hand, in the comparative example shown in FIG. 7A, the reluctance torque (of the permanent magnet rotor and the reluctance rotor) is zero at the current phase angle of 90° similarly to the magnet torque, and the output torque (total torque) is also zero at the current phase of 90°.

<Features of First Embodiment>

In the motor (20) of the first embodiment, in the circumferential direction of the rotor (31), the second position (P2) where the magnetic resistance reaches its maximum is shifted backward in the rotation direction from the first position (P1) where the magnetic flux generated by the magnets (33) reaches its maximum. This increases the difference between the current phase at which the magnet torque reaches its maximum and the current phase at which the reluctance torque reaches its maximum, thereby suppressing the decrease in output torque in a wide range of current phases.

The motor (20) of the first embodiment may be configured such that when there is a phase difference between the phase of the AC voltage induced in the winding (23) by the magnets (33) and the phase of the AC current supplied to the windings (23), and at the phase difference, the magnet torque generated by the magnets (33) and the AC current is zero, and the direction of the magnetic flux generated by the AC current is opposite to the direction of the magnetic flux generated by the magnets (33), the reluctance torque generated by the rotor core (32) and the AC current takes a positive value. This allows the reluctance torque to be a positive value even in a range where the phase difference at which the magnet torque is zero, that is, a range where the current phase is large, thereby increasing the output torque in the range where the current phase is large. Thus, control can be done to reduce the magnetic flux so that the voltage does not rise in the range where the current phase is large.

In general, an air conditioner performs maximum torque control in a low speed range of a compressor motor. The maximum torque control adjusts the current phase to maximize the output torque. In this case, the air conditioner is operated in a range where the current phase is as small as 45° or less. However, the air conditioner cannot be operated in a high-speed range under the maximum torque control because the voltage is saturated by the magnetic flux of the magnet. In contrast, magnetic flux reduction control allows the operation in the high-speed range. The magnetic flux reduction control brings the current phase close to 90° to reduce the magnetic flux and suppress the increase in voltage, thereby allowing the operation up to the high-speed range.

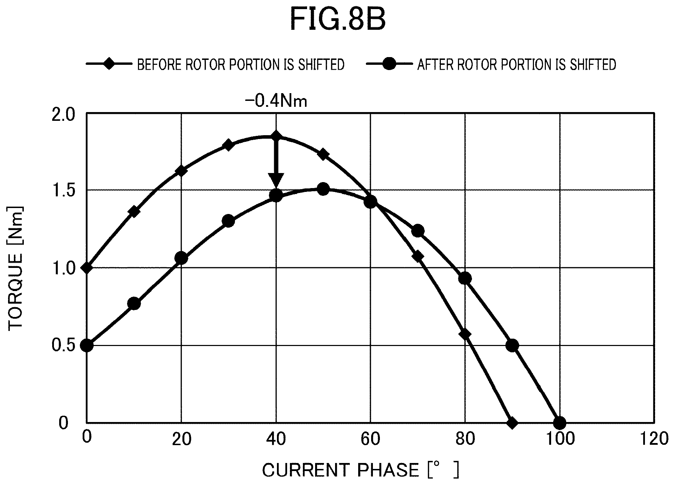

The "reluctance torque of the reluctance rotor" shown in FIG. 7B is negative in the range where the current phase is small, thereby causing the output torque of the motor (20) of the first embodiment to be smaller than the output torque of the motor of the comparative example as shown in FIGS. 7C and 8A. However, when the air conditioner to which the motor (20) of the first embodiment (a compressor motor) is applied is operated in the range where the current phase is small, the torque and the current are low, thereby reducing the decrease in output torque as shown in FIG. 8B. This is because the proportion of the reluctance torque decreases as the current decreases, thereby reducing the influence of the decrease in reluctance torque. The torque characteristics shown in FIG. 8A are obtained at a large current of 30 A, and the torque characteristics shown in FIG. 8B are obtained at a small current of 10 A.

In the motor (20) of the first embodiment, the rotor (31) may include the first rotor portion (31a) including the rotor core (32) and the magnets (33) and the second rotor portion (31b) disposed adjacent to the first rotor portion (31a) in the axial direction and includes the rotor core (32) and no magnets (33). Here, suppose the position of the first rotor portion (31a) in the circumferential direction where the magnetic flux generated by the magnets (33) reaches its maximum is the third position (P3) and the position of the second rotor portion (31b) in the circumferential direction where the magnetic resistance reaches its maximum is the fourth position (P4), the fourth position (P4) is shifted backward in the rotation direction of the rotor (31) from the third position (P3). This increases the difference between the current phase at which the magnet torque generated by the first rotor portion (31a) reaches its maximum and the current phase at which the reluctance torque generated by the second rotor portion (31b) reaches its maximum, thereby suppressing the decrease in output torque in a wide range of current phases. In this case, as viewed from the axial direction, the rotor core (32) of the first rotor portion (31a) may have substantially the same shape as the rotor core (32) of the second rotor portion (31b), and the rotor core (32) of the second rotor portion (31b) may be shifted backward in the rotation direction of the rotor (31) from the rotor core (32) of the first rotor portion (31a). The rotor core (32) of the first rotor portion (31a) and the rotor core (32) of the second rotor portion (31b) having the same shape allow easy manufacture of the rotor (31).

On the other hand, when the current phase at which the permanent magnet rotor generates the maximum torque and the current phase at which the reluctance rotor generates the maximum torque are matched as in the motor of Patent Document 1, the output torque increases at the matched current phase and in a range around the matched current phase where the current phase is small, but the output torque decreases in a range where the current phase is large.

(First Variation of First Embodiment)

In the first embodiment, as illustrated in FIGS. 3, 4A, and 4B, the rotor (31) includes the first rotor portion (31a) including the rotor core (32) and the magnets (33) and the second rotor portion (31b) including the rotor core (32) and no magnets (33).

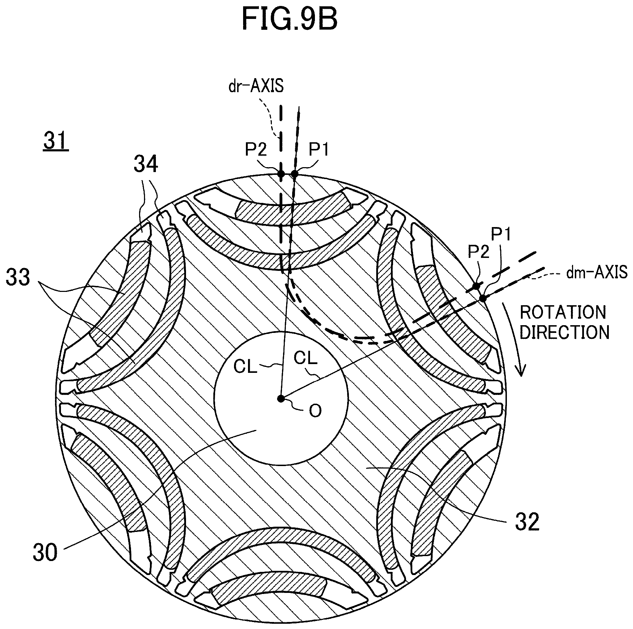

In this variation, the rotor (31) is a single rotor including the rotor core (32) and the magnets (33) (see FIG. 1). In this rotor (31), at least some of the magnets (33) are arranged asymmetrically with respect to the magnetic pole centerline (CL) when viewed from the axial direction as illustrated FIG. 9B. The motor (20) of this variation does not include a reluctance rotor such as the second rotor portion (31b) of the first embodiment.

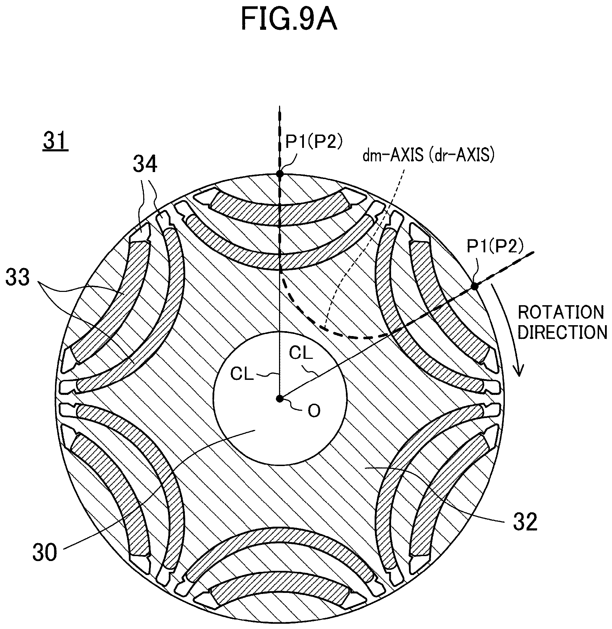

When the magnets (33) are disposed symmetrically with respect to the magnetic pole centerline (CL), the "first position (P1) in the circumferential direction where the magnetic flux generated by the magnets (33) reaches its maximum" and the "second position (P2) in the circumferential direction where the magnetic resistance reaches its maximum" are on the magnetic pole centerline (CL) as in the comparative example illustrated in FIG. 9A.

In contrast, of the magnets (33) constituting each magnetic pole of the rotor (31) of this variation illustrated in FIG. 9B, one disposed in the hole (34) on the radially outer side is shifted forward in the rotation direction of the rotor (31) so that the magnet (33) is asymmetrical with respect to the magnetic pole centerline (CL). The magnet (33) in the hole (34) on the radially inner side may be symmetrical with respect to the magnetic pole centerline (CL). Changing the position of at least some of the magnets (33) in this way shifts a field direction of the magnetic flux, and thus, the "second position (P2) in the circumferential direction where the magnetic resistance reaches its maximum" can be shifted backward in the rotation direction of the rotor (31) from the "first position (P1) in the circumferential direction where the magnetic flux generated by the magnets (33) reaches its maximum."

In FIGS. 9A and 9B, the same reference characters are given to the same components as those of the first embodiment shown in FIGS. 3, 4A, and 4B. In FIGS. 9A and 9B, the direction of the magnetic flux generated by the magnets (33) in the rotor (31) is referred to as a dm-axis, and the direction in which the magnetic resistance in the rotor (31) reaches its maximum is referred to as a dr-axis. In the comparative example shown in FIG. 9A, the dm- and dr-axes coincide with the magnetic pole centerline (CL) in a radially outer portion of the rotor (31), while the dm- and dr-axes do not coincide with the magnetic pole centerline (CL) in a radially inner portion of the rotor (31). In this variation shown in FIG. 9B, the dr-axis does not coincide with the magnetic pole centerline (CL) also in the radially outer portion of the rotor (31).

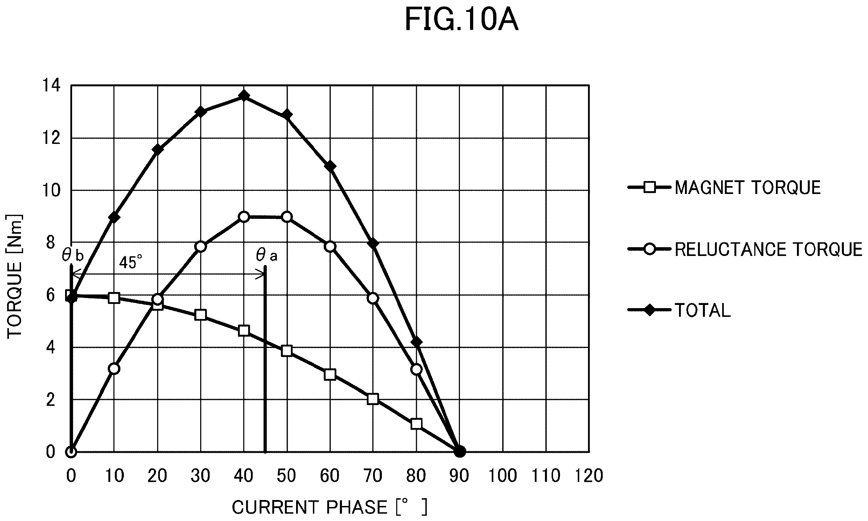

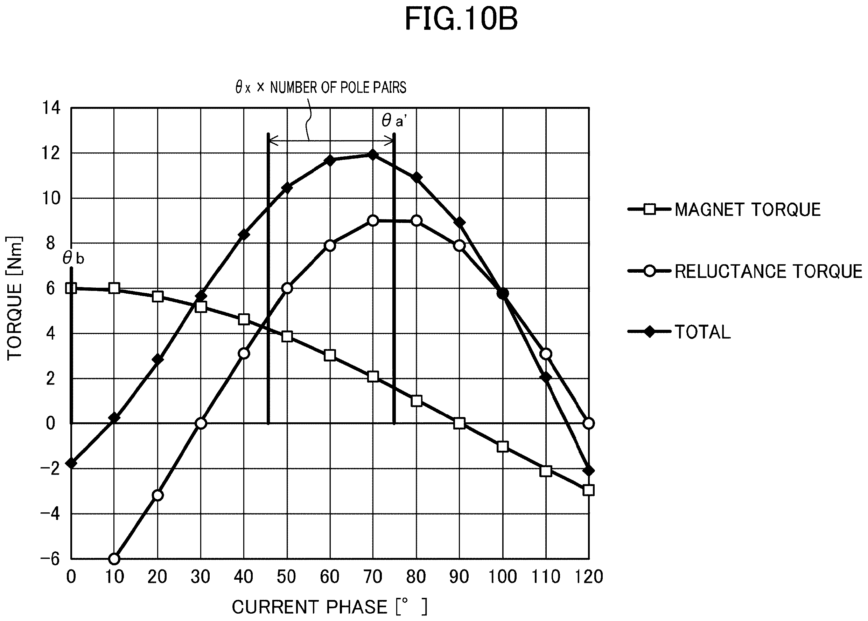

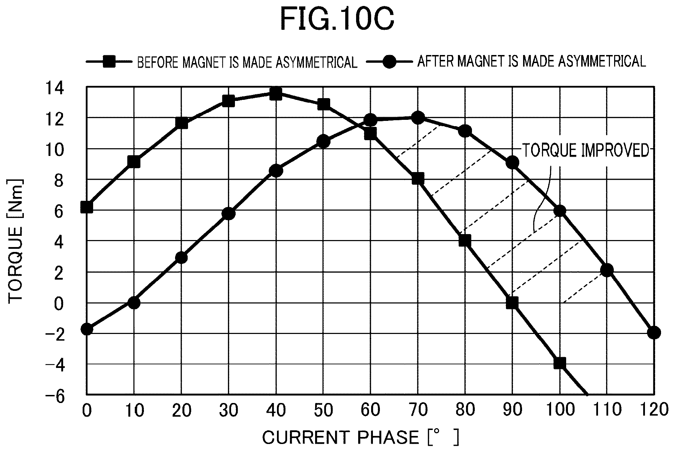

As described above, in the motor (20) of this variation, the position of the rotor (31) in the circumferential direction (second position (P2)) where the magnetic resistance reaches its maximum is shifted backward in the rotation direction of the rotor (31) from the position of the rotor (31) in the circumferential direction (first position (P1)) where the magnetic flux generated by the magnets (33) reaches its maximum as illustrated in FIG. 9B. This can increase the current phase at which the reluctance torque generated by the rotor (31) reaches its peak so that the current phase at which the magnet torque generated by the rotor (31) reaches its peak and the current phase at which the reluctance torque generated by the rotor (31) reaches its peak are separated from each other as illustrated FIGS. 10A and 10B. Thus, as illustrated FIG. 10C, the output torque (total torque) of the rotor (31) can be increased in a range where the current phase is large.

Specifically, FIG. 10A shows the torque characteristics of the case where, in the motor (20) of this variation, the second position (P2) is not shifted from the first position (P1) (comparative example), FIG. 10B shows the torque characteristics of the motor (20) of this variation when the second position (P2) is shifted backward in the rotation direction of the rotor (31) from the first position (P1) by the shift angle $\theta x$, and FIG. 10C shows the output torque of the comparative example and the output torque of this variation in comparison.

Suppose the "reluctance torque" shown in FIG. 10A reaches its peak at a current phase $\theta a$, the "magnet torque" shown in FIG. 10A reaches its peak at a current phase $\theta b$, and the "reluctance torque" shown in FIG. 10B reaches its peak at a current phase $\theta a'$, the shift angle $\theta x$ is determined to satisfy

$$45° < \theta a' - \theta b$$

and

$$\theta a' = (\theta x \times \text{the number of pole pairs}) + \theta a.$$

In other words, the shift angle $\theta x$ is determined so that the current phase $\theta a'$ at which the "reluctance torque" shown in FIG. 10B reaches its peak is larger than the current phase $\theta a$ at which the "reluctance torque" shown in FIG. 10A reaches its peak by "shift angle $\theta x \times$ the number of pole pairs." This can increase the current phase at which the reluctance torque generated by the rotor (31) reaches its peak so that the current phase at which the magnet torque generated by the rotor (31) reaches its peak and the current phase at which the reluctance torque generated by the rotor (31) reaches its peak are separated from each other, thereby increasing the output torque (total torque) of the rotor (31) in a range where the current phase is large.

The current phase $\theta b$ at which the "magnet torque" shown in FIGS. 10A and 10B reaches its peak is 0°, the current phase $\theta a$ at which the "reluctance torque"" shown in FIG. 10A reaches its peak is 45°, and the current phase $\theta a'$ at which the "reluctance torque" shown in FIG. 10B reaches its peak is larger than 45°.

In the motor (20) of this variation, as shown in FIG. 10B, the reluctance torque generated by the AC current supplied to the windings (23) and the rotor core (32) takes a positive value at a current phase of 90° at which the magnet torque is zero (a current phase at which the direction of the magnetic flux generated by the AC current supplied to the windings (23) is opposite to the direction of the magnetic flux generated by the magnets (33)). Thus, as shown in FIG. 10C, the output torque (total torque) also takes a positive value at the current phase of 90°. On the other hand, in the comparative example shown in FIG. 10A, the reluctance torque is zero at the current phase of 90° similarly to the magnet torque, and the output torque (total torque) is also zero at the current phase of 90°.

As described above, although the rotor (31) of this variation is a single rotor having no divided portions, the decrease in output torque can be reduced in a wide range of current phases as in the first embodiment.

(Second Variation of First Embodiment)

In the first embodiment, as illustrated in FIG. 3, the rotor (31) includes the single first rotor portion (31a) including the rotor core (32) and the magnets (33) and the single second rotor portion (31b) including the rotor core (32) and no magnets (33).

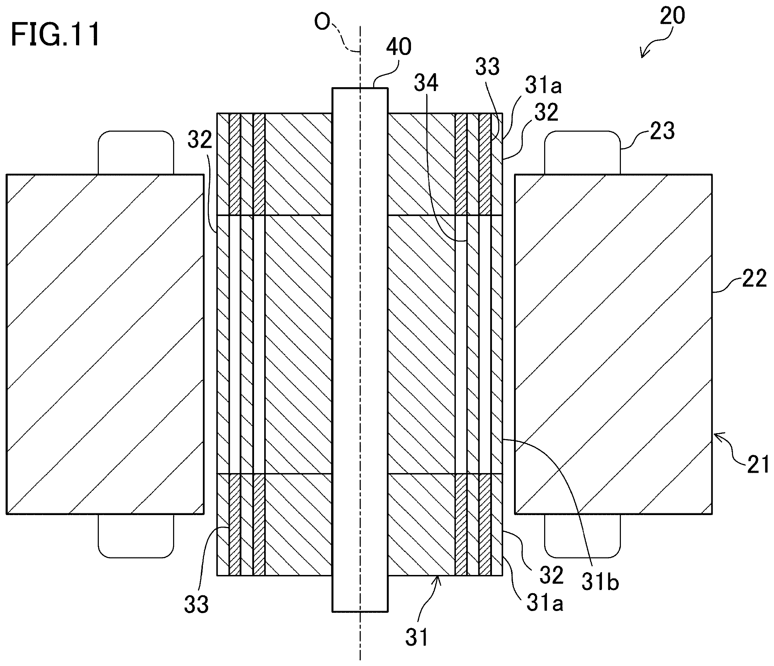

In this variation, as illustrated in FIG. 11, the rotor (31) includes two first rotor portions (31a) and one second rotor portion (31b), and the two first rotor portions (31a) are disposed to sandwich the second rotor portion (31b) in the axial direction. Each of the first rotor portions (31a) has a region that does not face the stator (21) in the radial direction. In other words, each first rotor portion (31a) has an overhang protruding from the stator (21) in the axial direction. Each first rotor portion (31a) has the same lateral cross section as the first rotor portion (31a) of the first embodiment illustrated in FIG. 4A, and the second rotor portion (31b) has the same lateral cross section as the second rotor portion (31b) of the first embodiment illustrated in FIG. 4B.

A portion of the rotor not facing the stator in the radial direction generates the magnet torque only. Thus, the first rotor portions (31a), each of which is a permanent magnet rotor, are disposed in regions of the rotor (31) of this variation at both axial ends not facing the stator (21).

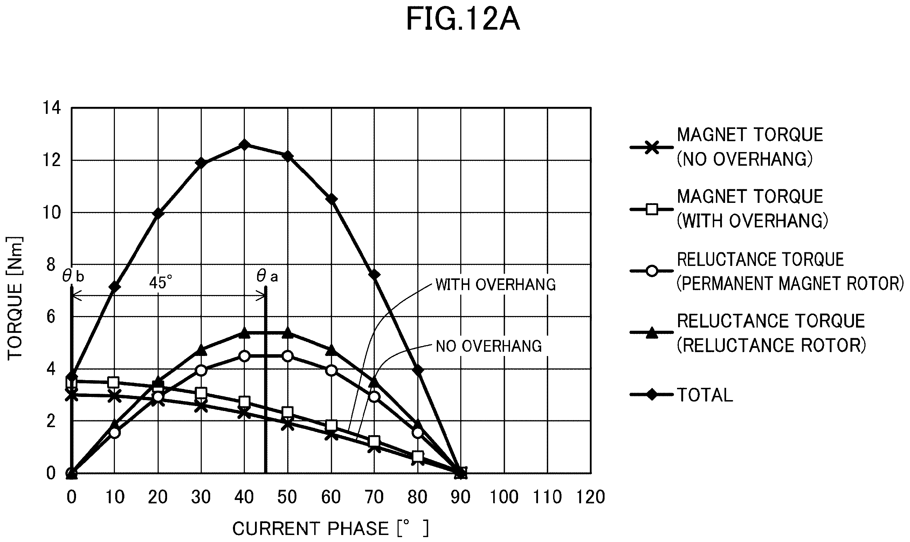

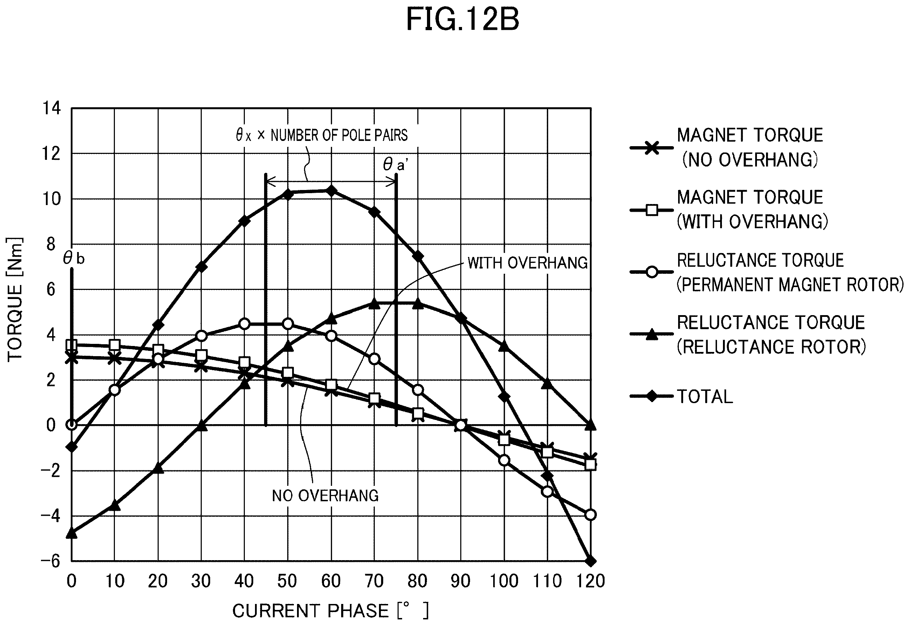

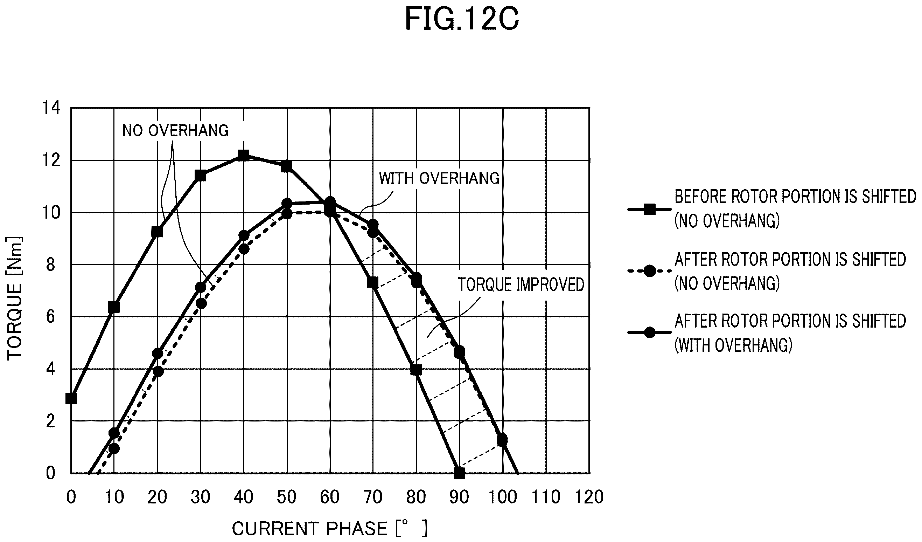

As described above, in the motor (20) of this variation, as in the first embodiment illustrated in FIGS. 4A and 4B, the position of the rotor (31) in the circumferential direction where the magnetic resistance reaches its maximum (second position (P2)), that is, the position of the second rotor portion (31b) in the circumferential direction where the magnetic resistance reaches its maximum (fourth position (P4)), is shifted backward in the rotation direction of the rotor (31) from the position of the rotor (31) in the circumferential direction where the magnetic flux generated by the magnets (33) reaches its maximum (first position (P1)), that is, the position of the first rotor portions (31a) in the circumferential direction where the magnetic flux generated by the magnets (33) reaches its maximum (third position (P3)). This can increase the current phase at which the reluctance torque generated by the second rotor portion (3 1b) reaches its peak so that the current phase at which the magnet torque generated by the first rotor portions (31a) reaches its peak and the current phase at which the reluctance torque generated by the second rotor portion (31b) reaches its peak are separated from each other as illustrated FIGS. 12A and 12B. Thus, as illustrated in FIG. 12C, the output torque (total torque) of the rotor (31) can be increased in a range where the current phase is large.

Specifically, FIG. 12A shows the torque characteristics of the case where, in the motor (20) of this variation, the fourth position (P4) is not shifted from the third position (P3) (comparative example), FIG. 12B shows the torque characteristics of the motor (20) of this variation when the fourth position (P4) is shifted backward in the rotation direction of the rotor (31) from the third position (P3) by the shift angle θx, and FIG. 12C shows the output torque of the comparative example and the output torque of this variation in comparison. In FIGS. 12A and 12B, the reluctance torque generated by the first rotor portions (31a) is referred to as "reluctance torque of the permanent magnet rotor," and the reluctance torque generated by the second rotor portion (31b) is referred to as "reluctance torque of the reluctance rotor."

FIGS. 12A and 12B also show the magnet torque characteristics obtained when no overhangs are provided for the first rotor portions (31a). The characteristics of the output torque (total torque) shown in FIGS. 12A and 12B are those obtained when the overhangs are provided for the first rotor portions (31a). FIG. 12C shows the output torque characteristics of the comparative example obtained when no overhangs are provided for the first rotor portions (31a), and the output torque characteristics of this variation obtained when the overhangs are provided for the first rotor portions (31a) and when no overhangs are provided for the first rotor portions (31a).

In this variation, the first rotor portions (31a) each have the overhang (a region that does not face the stator (21) in the radial direction), and thus, the magnet torque generated by the first rotor portions (31a) can be increased as compared with the case where no overhangs are provided as shown in FIGS. 12A and 12B, thereby increasing the output torque (total torque) as shown in FIG. 12C.

In this variation, the first rotor portions (31a) disposed at both ends in the axial direction may have different axial lengths, or one of the first rotor portions (31a) may have no overhang. Alternatively, the whole part of the first rotor portions (31a) in the axial direction may not face the stator core (22). In other words, an axial end portion of the second rotor core (32b) may not face the stator core (22) in the radial direction. Alternatively, the rotor may have a single first rotor portion (31a) as in the first embodiment, and the overhang may be provided for the first rotor portion (31a).

(Second Embodiment)

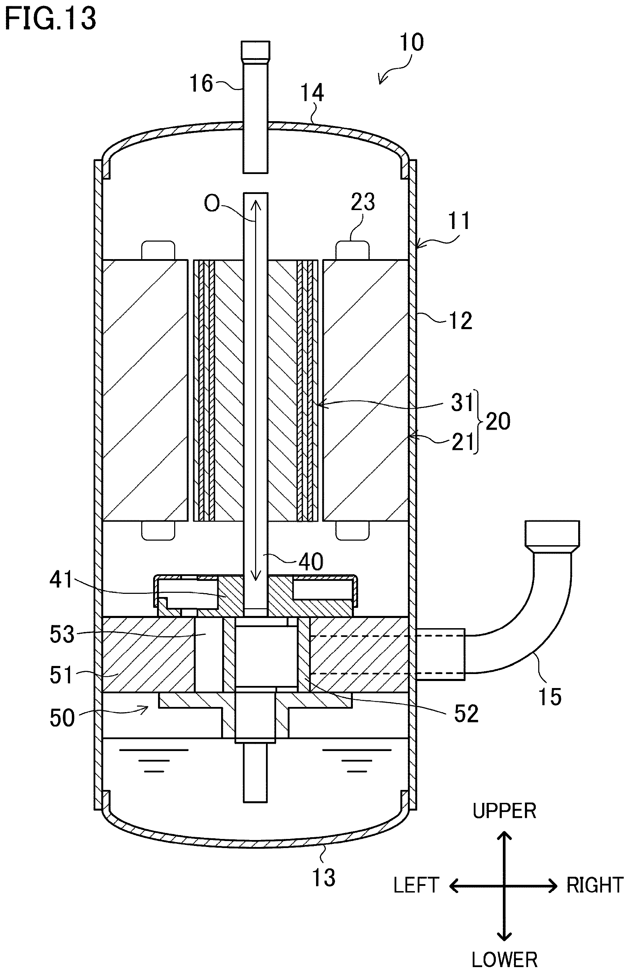

As illustrated in FIG. 13, the compressor (10) of a second embodiment is a rotary compressor. The compressor (10) includes a casing (11), the motor (20) of the first embodiment, a drive shaft (40), and a compression mechanism (50). In the following description, the terms "upper," "lower," "right," and "left" represent directions when the compressor (10) is viewed from the front (see the arrows in FIG. 13). The "upper" and "lower" sides mean the upper and lower sides in the axial direction of the drive shaft (40). The "right" and "left" are directions orthogonal to the axial direction, and are the same as the radial direction of the motor (20) (or the casing (11)).

The casing (11) is a hermetic container. The inside of the casing (11) is filled with a high-pressure refrigerant discharged from the compression mechanism (50). The casing (11) is made of a metal material. The casing (11) includes a barrel (12), a bottom (13), and a top (14). The barrel (12) is a tubular member extending in the up-down direction. The axial direction of the barrel (12) corresponds to the vertical direction. The bottom (13) closes a lower end of the barrel (12), while the top (14) closes an upper end of the barrel (12). The casing (11) houses the motor (20), the drive shaft (40), and the compression mechanism (50) in this order from the top.

The number of rotations of the motor (20) is controlled by an inverter device. In other words, the compressor (10) is an inverter compressor having the variable number of rotations. The stator (21) of the motor (20) is fixed to an inner peripheral surface of the barrel (12). The rotor (31) of the motor (20) rotates about the rotation axis (O) as described in the first embodiment. The drive shaft (40) extends downward from the motor (20). The drive shaft (40) is rotationally driven by the motor (20). The drive shaft (40) is rotatably supported by a bearing (41) provided below the motor (20).

The compression mechanism (50) has a cylinder (51) and a piston (52) provided inside the cylinder (51). A cylinder chamber (53) is formed between an inner peripheral surface of the cylinder (51) and an outer peripheral surface of the piston (52). The piston (52) driven by the drive shaft (40) compresses a fluid in the cylinder chamber (53).

The compressor (10) includes a suction pipe (15) and a discharge pipe (16). The suction pipe (15) penetrates the barrel (12) in the radial direction and communicates with the cylinder chamber (53). A low-pressure refrigerant is sucked into the cylinder chamber (53) through the suction pipe (15). The discharge pipe (16) penetrates the top (14) in the axial direction, and communicates with the internal space of the casing (11). The refrigerant compressed by the compression mechanism (50) flows through core cuts (not shown) of the motor (20), and is then discharged through the discharge pipe (16).

The compressor (10) of the second embodiment includes the motor (20) of the first embodiment that can suppress the decrease in output torque in a wide range of current phases, thereby improving energy efficiency.

The configuration of the compressor (10) shown in FIG. 13 is an example, and the compressor (10) is not limited to a rotary compressor. The compressor (10) can be any type of compressor such as a swing compressor, a scroll compressor, a screw compressor, or a turbo compressor.

(Third Embodiment)

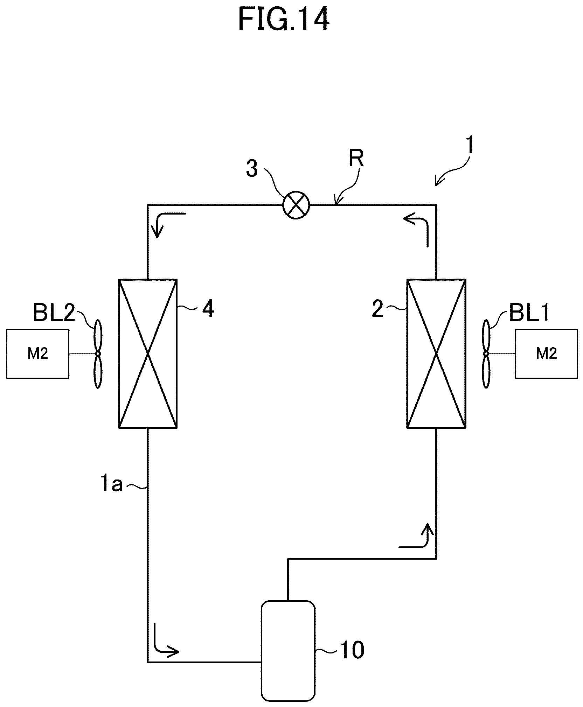

As illustrated in FIG. 14, a refrigeration apparatus (1) of the third embodiment is an air conditioner. The air conditioner (1) may be a cooling-only or heating-only air conditioner. The air conditioner (1) includes a refrigerant circuit (1a) filled with a refrigerant. The refrigerant circuit (1a) includes the compressor (10) of the second embodiment, a radiator (2), an expansion valve (3), and an evaporator (4). The refrigerant circuit (1a) performs a vapor compression refrigeration cycle. The air conditioner (1) may be an air conditioner switchable between cooling and heating. In this case, the air conditioner (1) further includes a switching mechanism for switching the direction of refrigerant circulation (e.g., a four-way switching valve).

In the refrigeration cycle, the refrigerant compressed by the compressor (10) dissipates heat to the air in the radiator (2). The refrigerant that has dissipated heat is decompressed by the expansion valve (3), and evaporates in the evaporator (4). The evaporated refrigerant is sucked into the compressor (10) (see the arrows in FIG. 14).

In the radiator (2), the refrigerant flowing through the radiator (2) and the air blown by a first blower (BL1) driven by a first motor (M1) exchange heat. In the evaporator (4), the refrigerant flowing through the evaporator (4) and the air blown by a second blower (BL2) driven by a second motor (M2) exchange heat.

The air conditioner (refrigeration apparatus) (1) of the third embodiment includes the compressor (10) of the second embodiment having high energy efficiency, thereby reducing power consumption.

The configuration of the refrigeration apparatus (1) shown in FIG. 14 is an example, and the refrigeration apparatus (1) is not limited to an air conditioner. The refrigeration apparatus (1) may be any type of apparatus such as a water heater, a chiller unit, or a cooling apparatus that cools the air in a room. The cooling apparatus cools the air in a room such as a refrigerator, a freezer, or a container.

(Other Embodiments)

In the first embodiment and its second variation, the two holes (34) aligned in the radial direction are provided for each magnetic pole of the first rotor portion (31a) and the second rotor portion (31b), but the holes (34) may be replaced with a single hole (34) or three or more holes (34) aligned in the radial direction. In the first variation of the first embodiment, the two holes (34) aligned in the radial direction are provided for each magnetic pole of the rotor (31), but the holes (34) may be replaced with a single hole (34) or three or more holes (34) aligned in the radial direction.

In the first embodiment and its second variation, no magnets (33) are provided in the holes (34) of the second rotor portion (31b). However, the magnets (33) may be provided in the holes (34) of the second rotor portion (31b) if the volume per unit length in the axial direction of the magnets (33) in the first rotor portion (31a) is larger than the volume per unit length in the axial direction of the magnets (33) in the second rotor portion (31b).

In the first embodiment and its first and second variations, each hole (34) is formed in an arc shape that is convex radially inward when viewed in the axial direction, but the holes (34) may have any shape. The hole (34) may have a linearly extending portion when viewed in lateral cross section. The hole (34) may include a first linear portion perpendicular to the radial direction when viewed from the axial direction and second portions extending from both ends of the first portion toward the outer peripheral surface of the rotor core (32). The hole (34) may have a shape other than the convex shape facing radially inward when viewed from the axial direction, for example, an arc shape that is convex radially outward when viewed from the axial direction, a linear shape perpendicular to the radial direction when viewed from the axial direction, a linear shape extending in the radial direction when viewed from the axial direction, or a substantially V-shape opening in the radial direction when viewed from the axial direction.

While the embodiments including the variations have been described above, it will be understood that various changes in form and details can be made without departing from the spirit and scope of the claims. The above-described embodiments and variations may be appropriately combined or replaced. The expressions of "first," "second," "third," ... , in the specification and claims are used to distinguish the terms to which these expressions are given, and do not limit the number and order of the terms.

INDUSTRIAL APPLICABILITY

As described above, the present disclosure is useful for a compressor motor, a compressor, and a refrigeration apparatus.

DESCRIPTION OF REFERENCE CHARACTERS

| | |
|---|---|
| 1 | Refrigeration Apparatus |
| 10 | Compressor |
| 20 | Compressor Motor |
| 21 | Stator |
| 22 | Stator Core |
| 23 | Winding |
| 31 | Rotor |
| 31a | First Rotor Portion |
| 31b | Second Rotor Portion |
| 32 | Rotor Core |
| 33 | Magnet |
| 34 | Hole |
| O | Rotation Axis |
| CL | Magnetic Pole Centerline |
| P1 | First Position |
| P2 | Second Position |
| P3 | Third Position |
| P4 | Fourth Position |

**Claims**

1. A compressor motor (20), comprising:

   a rotor (31) configured to rotate in one direction about a rotation axis (O), including a rotor core (32) and a magnet (33), and having polarities alternated in a circumferential direction; and
   a stator (21) disposed to face the rotor (31) in a radial direction and including a stator core (22) and a winding (23), wherein
   suppose a position of the rotor (31) in a circumferential direction where magnetic flux generated by the magnet (33) reaches its maximum is a first position (P1),
   a position of the rotor (31) in the circumferential direction where magnetic resistance reaches its maximum is a second position (P2), and
   an imaginary straight line passing the first position (P1) and the rotation axis (O) is a magnetic pole centerline (CL),
   at least a portion of the magnet (33) or the rotor core (32) is asymmetrical with respect to the magnetic pole centerline (CL), and the second position (P2) is shifted backward in a rotation direction of the rotor (31) from the first position (P1), as viewed from an axial direction.

2. The compressor motor (20) of claim 1, wherein

when there is a phase difference between a phase of an AC voltage induced in the winding (23) by the magnet (33) and a phase of an AC current supplied to the winding (23), and
at the phase difference, magnet torque generated by the magnet (33) and the AC current is zero, and a direction of magnetic flux generated by the AC current is opposite to a direction of magnetic flux generated by the magnet (33), reluctance torque generated by the rotor core (32) and the AC current takes a positive value.

3. The compressor motor (20) of claim 1 or 2, wherein

   the rotor (31) includes

   a first rotor portion (31a) including the rotor core (32) and the magnet (33) and
   a second rotor portion (31b) that is disposed adjacent to the first rotor portion (31a) in the axial direction and includes the rotor core (32) and no magnets (33), and

   suppose a position of the first rotor portion (31a) in the circumferential direction where the magnetic flux generated by the magnet (33) reaches its maximum is a third position (P3) and
   a position of the second rotor portion (31b) in the circumferential direction where the magnetic resistance reaches its maximum is a fourth position (P4),
   the fourth position (P4) is shifted backward in the rotation direction of the rotor (31) from the third position (P3).

4. The compressor motor (20) of claim 3, wherein

   as viewed from the axial direction, the rotor core (32) of the first rotor portion (31a) has substantially the same shape as the rotor core (32) of the second rotor portion (31b), and
   the rotor core (32) of the second rotor portion (31b) is shifted backward in the rotation direction of the rotor (31) from the rotor core (32) of the first rotor portion (31a).

5. The compressor motor (20) of claim 3 or 4, wherein the first rotor portion (31a) has a region that does not face the stator (21) in the radial direction.

6. The compressor motor (20) of any one of claims 1 to 5, wherein
at least a portion of the magnet (33) is asymmetrical with respect to the magnetic pole centerline (CL).

7. A compressor comprising the compressor motor (20) of any one of claims 1 to 6.

**8.** A refrigeration apparatus comprising the compressor (10) of claim 7.

FIG.1

EP 4 779 845 A1

# FIG.2

CIRCUMFERENTIAL DIRECTION   20

FIG.3

# FIG.4A

REFERENCE 0°

31a

34

P3(P1)

33

ROTATION
DIRECTION

CL

O

32

30

# FIG.4B

REFERENCE 0°

SHIFT ANGLE $\theta x$

P4(P2)

31b

ROTATION DIRECTION

CL

O

34

32

30

# FIG.5A

OSCILLOSCOPE

U V W

LOAD MOTOR    TARGET MOTOR

ROTATIONAL POSITION SENSOR

ROTATE TARGET MOTOR
AT CONSTANT ROTATIONAL SPEED

# FIG.5B

ACQUIRE ROTATIONAL POSITION INFORMATION
AT MAXIMUM VOLTAGE FROM ROTATIONAL POSITION SENSOR

VOLTAGE [V]

0

POSITION $\theta$ [deg]

# FIG.5C

# FIG.6A

POWER SOURCE

POWER METER

U    V

OSCILLOSCOPE

LOAD MOTOR    TARGET MOTOR

ROTATIONAL POSITION SENSOR

CHANGE POSITION OF TARGET MOTOR

# FIG.6B

ACQUIRE ROTATIONAL POSITION INFORMATION
WHERE INDUCTANCE REACHES ITS MINIMUM

INDUCTANCE [mH]

POSITION $\theta$ [deg]

# FIG.6C

# FIG.7A

EP 4 779 845 A1

# FIG.7B

EP 4 779 845 A1

# FIG.7C

◆— BEFORE ROTOR PORTION IS SHIFTED    ●— AFTER ROTOR PORTION IS SHIFTED

TORQUE IMPROVED

TORQUE [Nm] vs CURRENT PHASE [°]

# FIG.8A

◆— BEFORE ROTOR PORTION IS SHIFTED    ●— AFTER ROTOR PORTION IS SHIFTED

−3.5Nm

TORQUE [Nm] vs CURRENT PHASE [°]

# FIG.8B

# FIG.9A

# FIG.9B

# FIG.10A

EP 4 779 845 A1

# FIG.10B

θx × NUMBER OF POLE PAIRS

θa'

θb

—□— MAGNET TORQUE

—○— RELUCTANCE TORQUE

—◆— TOTAL

TORQUE [Nm]

CURRENT PHASE [°]

EP 4 779 845 A1

# FIG.10C

FIG.11

EP 4 779 845 A1

# FIG.12A

EP 4 779 845 A1

FIG.12B

# FIG.12C

EP 4 779 845 A1

FIG.13

# FIG.14

## INTERNATIONAL SEARCH REPORT

| International application No. |
| --- |
| **PCT/JP2025/025825** |

**A. CLASSIFICATION OF SUBJECT MATTER**

*H02K 1/276*(2022.01)i; *F04B 39/00*(2006.01)i; *F04C 29/00*(2006.01)i
FI: H02K1/276; F04B39/00 106C; F04C29/00 T

According to International Patent Classification (IPC) or to both national classification and IPC

**B. FIELDS SEARCHED**

Minimum documentation searched (classification system followed by classification symbols)

H02K1/276; F04B39/00; F04C29/00

Documentation searched other than minimum documentation to the extent that such documents are included in the fields searched

Published examined utility model applications of Japan 1922-1996
Published unexamined utility model applications of Japan 1971-2025
Registered utility model specifications of Japan 1996-2025
Published registered utility model applications of Japan 1994-2025

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
| --- | --- | --- |
| Y | JP 2015-133825 A (JTEKT CORP.) 23 July 2015 (2015-07-23)<br>    paragraphs [0007]-[0039], fig. 1-3 | 1, 6-8 |
| A | | 2-5 |
| Y | JP 10-309050 A (MATSUSHITA ELECTRIC INDUSTRIAL CO., LTD.) 17 November 1998 (1998-11-17)<br>    paragraphs [0001]-[0024], fig. 9-10 | 1, 6-8 |
| A | | 2-5 |
| A | WO 2018/101160 A1 (AISIN AW CO., LTD.) 07 June 2018 (2018-06-07)<br>    entire text, all drawings | 1-8 |
| A | JP 2022-068687 A (TOYOTA JIDOSHA KABUSHIKI KAISHA) 10 May 2022 (2022-05-10)<br>    entire text, all drawings | 1-8 |

☐ Further documents are listed in the continuation of Box C.    ☑ See patent family annex.

| | |
| --- | --- |
| * Special categories of cited documents:<br>"A" document defining the general state of the art which is not considered to be of particular relevance<br>"D" document cited by the applicant in the international application<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
| --- | --- |
| **08 August 2025** | **26 August 2025** |

| Name and mailing address of the ISA/JP | Authorized officer |
| --- | --- |
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (July 2022)

INTERNATIONAL SEARCH REPORT
Information on patent family members

International application No.

**PCT/JP2025/025825**

| Patent document cited in search report | | | Publication date (day/month/year) | Patent family member(s) | | | Publication date (day/month/year) |
|---|---|---|---|---|---|---|---|
| JP | 2015-133825 | A | 23 July 2015 | (Family: none) | | | |
| JP | 10-309050 | A | 17 November 1998 | (Family: none) | | | |
| WO | 2018/101160 | A1 | 07 June 2018 | (Family: none) | | | |
| JP | 2022-068687 | A | 10 May 2022 | US entire text, all drawings CN | 2022/0131433 114400806 | A1 A | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2003018777 A